(19) Europäisches Patentamt
European Patent Office
Office européen des brevets

(11) **EP 4 646 914 A1**

(12) **EUROPÄISCHE PATENTANMELDUNG**

(43) Veröffentlichungstag:
**12.11.2025   Patentblatt 2025/46**

(21) Anmeldenummer: **25167280.4**

(22) Anmeldetag: **31.03.2025**

(51) Internationale Patentklassifikation (IPC):
**A01D 41/14** [(2006.01)]   **A01D 75/28** [(2006.01)]

(52) Gemeinsame Patentklassifikation (CPC):
**A01D 41/141; A01D 75/287**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **08.05.2024   DE 102024112870**

(71) Anmelder: **CLAAS Selbstfahrende Erntemaschinen GmbH 33428 Harsewinkel (DE)**

(72) Erfinder:
• **Füchtling, Christian**
  **48317 Rinkerode Drenstein (DE)**
• **Wielenberg, Andreas**
  **32049 Herford (DE)**
• **Hinz, Thomas**
  **33428 Harsewinkel (DE)**
• **Beschorn, Udo**
  **33428 Harsewinkel (DE)**

(74) Vertreter: **CLAAS Gruppe Mühlenwinkel 1 33428 Harsewinkel (DE)**

(54) **VERFAHREN ZUM BETREIBEN EINES AN EINER AUFNAHMEVORRICHTUNG EINES MÄHDRESCHERS ANGEORDNETEN VORSATZGERÄTES SOWIE SELBSTFAHRENDER MÄHDRESCHER**

(57)    Die vorliegende Erfindung betrifft ein Verfahren zum Betreiben eines an einer durch Aktoren (5) höhenverstellbaren Aufnahmevorrichtung (3) eines selbstfahrenden Mähdreschers (1) angeordneten Vorsatzgerätes (2, 20), welches ein Mittensegment (21) und zwei Seitensegmente (22L, 22R) umfasst, die jeweils durch ein Rahmengelenk (23) mit dem Mittensegment (21) um eine in Fahrtrichtung (FR) orientierte Schwenkachse (24) schwenkbar verbunden sind, wobei das jeweilige Seitensegment (22L, 22R) mittels zumindest eines Aktors (25), der von einer Steuereinheit (17) angesteuert wird, relativ zum Mittensegment (21) um die Schwenkachse (24) schwenkbar ist, wobei ein Querlagewinkel (19) des Vorsatzgerätes (2, 20) durch Schwenken um eine virtuelle Pendelachse (8) der Aufnahmevorrichtung (3) eingestellt wird, wobei ein Abstand (12) zwischen Boden (10) und Vorsatzgerät (2, 20) mittels an der Unterseite des Vorsatzgerätes (2, 20) angeordneter Abstandssensoren (13) bestimmt wird, deren Signale der Steuereinheit (17) zur Auswertung zugeführt werden, durch welche in Abhängigkeit von den Signalen eine Querregelung des Vorsatzgerätes (2, 20) und/oder der jeweiligen Seitensegmente (22L, 22R) angesteuert wird, wobei die Querregelung durch die Steuereinheit (17) in Abhängigkeit von einer Priorisierung zur Höhenführung eines der beiden Seitensegmente (22L, 22R) durchgeführt wird.

Fig. 1

EP 4 646 914 A1

**Beschreibung**

Die vorliegende Erfindung betrifft ein Verfahren zum Betreiben eines an einer durch Aktoren höhenverstellbaren Aufnahmevorrichtung eines selbstfahrenden Mähdreschers angeordneten Vorsatzgerätes gemäß dem Oberbegriff des Anspruches 1. Weiterhin ist ein selbstfahrender Mähdrescher gemäß dem Oberbegriff des Anspruches 11 Gegenstand der vorliegenden Erfindung.

Ein Verfahren zum Betreiben eines an einer durch Aktoren höhenverstellbaren Aufnahmevorrichtung eines selbstfahrenden Mähdreschers angeordneten Vorsatzgerätes sowie ein selbstfahrender Mähdrescher der eingangs genannten Art sind aus der Offenlegungsschrift EP 4 162 789 A1 bekannt. Darin ist ein Verfahren zur Schnitthöhenregelung des Vorsatzgerätes offenbart, welches den Abstand des Vorsatzgerätes zum Boden durch Auswertung von Sensorsignalen, die von mehreren Abstandssensoren, die an den einzelnen Segmenten des Vorsatzgerätes angeordnet sind, bestimmt. Zur Bodenführung mittels Schnitthöhenregelung werden bei diesem Vorsatz drei separate Regelungen ausgeführt. Es wird eine Höhenregelung, eine Querregelung des gesamten Vorsatzgerätes sowie eine Querregelung der einzelnen Seitensegmente relativ zum Mittensegment durchgeführt. Hierfür wird der Abstand zwischen Vorsatzgerät und Boden über die Breite an mehreren Stellen durch die Abstandssensoren erfasst. Durch den mittels der Querregelung eingestellten Querausgleich wird das gesamte Vorsatzgerät gegenüber dem Boden so ausgerichtet, dass eine Differenz des Abstands zwischen dem Vorsatzgerät und dem Boden an den äußeren Enden des Vorsatzgerätes ausgeglichen wird, wodurch das Vorsatzgerät mittig ausgerichtet wird. Das Verfahren stößt an seine Grenzen, wenn ein zu bearbeitendes Feld in Terrassenanbauweise betrieben wird. Beim Terrassenanbau werden in Gebieten mit Gefälle aufeinanderfolgende Schichten flacher Flächen angelegt, um die Bodenerhaltung und den Wasserabfluss besser zu kontrollieren. Unter diesen Bedingungen kann es dazu kommen, dass die Verstellung der Seitensegmente bei der Anpassung an die Bodenkontur auf beiden Seiten durch einen unteren mechanischen Endanschlag begrenzt wird und damit eine weitere Anpassung an die Bodenkontur nicht möglich ist. Da das aus der EP 4 162 789 A1 bekannte Verfahren das Vorsatzgerät zum Querausgleich über die Breite des Vorsatzgerätes gesehen mittig ausrichtet, kann es dann dazu kommen, dass auf einer Seite oder auf beiden Seiten des Vorsatzgerätes Erntegut stehen gelassen wird.

Um dies zu vermeiden, kann entweder versetzt gefahren werden, was jedoch nicht unter allen Bedingungen möglich ist, oder der Bediener muss den Querausgleich und damit die Höhenregelung manuell übersteuern. Das manuelle Übersteuern kann den Bediener aufgrund der Breite des Vorsatzgerätes und den hierfür zu verstellenden Komponenten schnell überfordern. Damit kann es im schlimmsten Fall zu einer Beschädigung des Vorsatzgerätes kommen.

Ausgehend vom vorstehend genannten Stand der Technik liegt der Erfindung die Aufgabe zugrunde, ein Verfahren zum Betreiben eines an einer durch Aktoren höhenverstellbaren Aufnahmevorrichtung eines selbstfahrenden Mähdreschers angeordneten Vorsatzgerätes der eingangs genannten Art sowie einen selbstfahrenden Mähdrescher weiterzubilden, so dass der Bediener von einer manuellen Übersteuerung entlastet wird.

Diese Aufgabe wird erfindungsgemäß durch ein Verfahren zum Betreiben eines an einer durch Aktoren höhenverstellbaren Aufnahmevorrichtung eines selbstfahrenden Mähdreschers angeordneten Vorsatzgerätes mit den Merkmalen des Anspruches 1 sowie einen selbstfahrenden Mähdrescher mit den Merkmalen des nebengeordneten Anspruches 11 gelöst. Vorteilhafte Weiterbildungen sind Gegenstand der abhängigen Ansprüche.

Gemäß dem Anspruch 1 wird ein Verfahren zum Betreiben eines an einer durch Aktoren höhenverstellbaren Aufnahmevorrichtung eines selbstfahrenden Mähdreschers angeordneten Vorsatzgerätes, welches ein Mittensegment und zwei Seitensegmente umfasst, die jeweils durch ein Rahmengelenk mit dem Mittensegment um eine in Fahrtrichtung orientierte Schwenkachse schwenkbar verbunden sind, wobei das jeweilige Seitensegment mittels zumindest eines Aktors, der von einer Steuereinheit angesteuert wird, relativ zum Mittensegment um die Schwenkachse schwenkbar ist, wobei ein Querlagewinkel des Vorsatzgerät durch Schwenken um eine virtuelle Pendelachse der Aufnahmevorrichtung eingestellt wird, wobei ein Abstand zwischen Boden und Vorsatzgerät und/oder Messerbalken mittels an der Unterseite des Vorsatzgerätes angeordneter Abstandssensoren bestimmt wird, deren Signale der Steuereinheit zur Auswertung zugeführt werden, durch welche in Abhängigkeit von den Signalen eine Querregelung des Vorsatzgerätes und/oder der jeweiligen Seitensegmente angesteuert wird. Erfindungsgemäß ist vorgesehen, dass die Querregelung durch die Steuereinheit in Abhängigkeit von einer Priorisierung zur Höhenführung eines der beiden Seitensegmente durchgeführt wird.

Durch die Priorisierung des Querausgleichs für eines der beiden Seitensegmente wird erreicht, dass durch den Querausgleich das Vorsatzgerät so positioniert wird, dass das priorisierte Seitensegment und das Mittensegment im Mittel eine eingestellte Schnitthöhe erreichen und einhalten. Für das andere nicht priorisierte Seitensegment kann sich am äußeren Ende ein von der eingestellten Schnitthöhe abweichender Abstand zum Boden einstellen. Dadurch wird eine automatische Bodenführung des Vorsatzgerätes bei einem Vorliegen von Bodenkonturen ermöglicht, welche sich nicht alleine durch den Verstellweg der Seitensegmente ausgleichen lassen. Durch das erfindungsgemäße Verfahren hat der Bediener die Möglichkeit, auch in dem beschriebenen, in Terrassenanbauweise angelegten Feld mit automatischer Bodenführung zu fahren und über die Priorisierung vorzugeben, auf welcher Seite das Erntegut abgeschnitten werden soll und auf welcher Seite es ggf. stehen bleiben kann. Ein manuelles Übersteuern oder ein versetztes Fahren ist somit nicht erforderlich.

Die Abstandssensoren können den Boden kontaktierend und damit direkt einen Abstand bestimmend ausgeführt sein. Alternativ können die Abstandssensoren dazu eingerichtet sein, den Abstand zum Boden indirekt zu bestimmen. Für eine indirekte Abstandsmessung durch Abstandssensoren kann vorgesehen sein, dass diese nicht unmittelbar mit dem Boden in Berührung stehen, sondern eine Relativbewegung zumindest eines den Boden berührenden Bauteils des Vorsatzgerätes erfassen. Weiterhin ist es denkbar, dass beide Varianten von Abstandssensoren am Vorsatzgerät vorgesehen sind.

Bevorzugt kann die Priorisierung zur Höhenführung eines der Seitensegmente durch eine manuelle Eingabe und/oder Auswahl mittels einer Benutzerschnittstelle vorgegeben werden. Der Bediener des Mähdreschers kann anhand der bestehenden Bodenkontur entscheiden, welches Seitensegment priorisiert werden soll.

Insbesondere kann das priorisierte Seitensegment mit einem geringeren Abstand zum Boden geführt werden als das andere nicht priorisierte Seitensegment. Um Erntegut auf beiden Seiten abzuschneiden, kann die Fahrspur ein zweites Mal mit entsprechender Priorisierung für den Querausgleich überfahren werden.

Gemäß einer Weiterbildung können die Signale von mindestens einem am äußeren Ende des jeweiligen Seitensegmentes und zumindest einem zum Mittensegment benachbart angeordneten Abstandssensor sowie zumindest zwei an dem Mittensegment zueinander beabstandet angeordneten Abstandssensoren von der Steuereinheit empfangen und ausgewertet werden, aus denen ein jeweiliger Abstand der Seitensegmente und des Mittensegmentes zum Boden bestimmt wird. Bevorzugt sind am äußeren Ende des jeweiligen Seitensegmentes zwei Abstandssensoren zueinander beabstandet angeordnet.

Bevorzugt können entsprechend der Priorisierung eines Seitensegmentes zur Querregelung nur Signale des mindestens einen am äußeren Ende angeordneten Abstandssensors des priorisierten Seitensegmentes und die Signale aller Abstandssensoren zumindest des anderen Seitensegmentes verwendet werden.

Des Weiteren können zusätzlich Signale des am Mittensegment angeordneten Abstandssensors verwendet werden, welcher dem priorisierten Seitensegment abgewandt angeordnet ist.

Weiterhin kann vorgesehen sein, dass nur ein Minimalwert des mindestens einen Abstandssensors am äußeren Ende des priorisierten Seitensegmentes und nur ein Minimalwert aller Abstandssensoren des anderen Seitensegmentes verwendet werden.

Durch diese Vorverarbeitung wird erreicht, dass durch den Querausgleich das Vorsatzgerät derart positioniert werden kann, dass das priorisierte Seitensegment und weitgehend das Mittensegment des Vorsatzgerätes im Mittel eine eingestellte Schnitthöhe erreichen.

Gemäß einer Weiterbildung kann der Querlagewinkel zum Querausgleich mittels zumindest einen an der Aufnahmevorrichtung angeordneter Linearaktors durch das Schwenken um die virtuelle Pendelachse der Aufnahmevorrichtung eingestellt werden. Das Vorsatzgerät kann durch die Ansteuerung des zumindest einen Linearaktors an der Aufnahmevorrichtung aktiv geschwenkt werden. Die Ansteuerung kann bevorzugt durch die Steuereinheit durchgeführt werden.

Alternativ oder zusätzlich kann der Querlagewinkel zum Querausgleich mittels an dem Vorsatzgerät angeordneter Stützelemente durch das Schwenken um die virtuelle Pendelachse der Aufnahmevorrichtung eingestellt werden. Dabei kann dem jeweiligen Stützelement ein Aktor zugeordnet sein, welcher durch eine Druckregelung mit einem individuell einstellbaren Druck beaufschlagt ist. Durch die Druckregelung lässt sich der Querlagewinkel zum Ausgleich in der Weise einstellen, dass der Druck des einen Aktors erhöht und der des anderen Aktors gesenkt wird. Dadurch ändert sich die Auslenkung der Stützelemente, die durch die Aktoren mit einer einstellbaren Stützkraft beaufschlagt werden. Der zumindest eine an der Aufnahmevorrichtung angeordnete Aktor ist ansteuerbar, um diesen dabei in eine Schwimmstellung zu überführen. Die Ansteuerung kann bevorzugt durch die Steuereinheit durchgeführt werden.

Alternativ oder zusätzlich kann zum Querausgleich der Aktor des priorisierten Seitensegmentes angesteuert werden.

Insbesondere eine Kombination der Ansteuerung des zumindest einen Linearaktors an der Aufnahmevorrichtung und/oder eines dem Stützelement des priorisierten Seitensegmentes zugeordneten Aktors und/oder des Aktors des priorisierten Seitensegmentes durch die Steuereinheit kann vorteilhaft sein, um das gewünschte Arbeitsergebnis bei automatischer Bodenführung des Vorsatzgerätes zu erreichen.

Die eingangs gestellte Aufgabe wird weiterhin durch einen Mähdrescher mit den Merkmalen des nebengeordneten Anspruches 11 gelöst.

Gemäß dem Anspruch 11 wird ein selbstfahrender Mähdrescher vorgeschlagen, der ein an einer durch Aktoren höhenverstellbaren Aufnahmevorrichtung angeordnetes Vorsatzgerät umfasst, welches ein Mittensegment und zwei Seitensegmente umfasst, die jeweils durch ein Rahmengelenk mit dem Mittensegment um eine in Fahrtrichtung orientierte Schwenkachse schwenkbar verbunden sind, wobei das jeweilige Seitensegment mittels zumindest eines Aktors, der von einer Steuereinheit angesteuert wird, relativ zum Mittensegment um die Schwenkachse schwenkbar ist, wobei ein Querlagewinkel des Vorsatzgerätes durch Schwenken um eine virtuelle Pendelachse der Aufnahmevorrichtung einstellbar ist, wobei zur Bestimmung eines Abstand zwischen Boden und Vorsatzgerät und/oder Messerbalken an der Unterseite des Vorsatzgerätes Abstandssensoren angeordnet sind, wobei die Steuereinheit dazu eingerichtet ist, Signale von den Abstandssensoren zu empfangen und auszuwerten und in Abhängigkeit von den Signalen eine Querregelung des Vorsatzgerätes und/oder der jeweiligen Seitensegmente anzusteuern, wobei die Steuereinheit zur Durchführung des Verfahrens nach einem der Ansprüche 1 bis 10 eingerichtet und ausgeführt ist. Auf die erfindungsgemäßen Ausführungen zum Verfahren darf verwiesen werden.

Insbesondere kann die Steuereinheit mit einer Benutzerschnittstelle verbunden sein, welche zur Eingabe und/oder Auswahl einer Priorisierung zur Höhenführung eines der Seitensegmente eingerichtet ist. Die manuelle Vorgabe der Priorisierung der Höhenführung eines der Seitensegmente ermöglicht es dem Bediener, die zur Regelung des Querausgleichs verwendeten Signale für eine Seite des Vorsatzgerätes, d.h. auf die Breite des priorisierten Seitensegmentes und zumindest teilweise des Mittensegmentes beschränkt, vorzugeben.

Die vorliegende Erfindung wird nachstehend anhand eines in den Zeichnungen dargestellten Ausführungsbeispieles näher erläutert.

Es zeigen:

Fig. 1    schematisch und exemplarisch eine Teilansicht eines Mähdreschers mit einem daran angeordneten Vorsatzgerät;

Fig. 2    schematisch und exemplarisch eine Teilansicht eines als Bandschneidwerk ausgeführten Vorsatzgerätes;

Fig. 3    schematisch eine stark vereinfachte Darstellung des Vorsatzgerätes gemäß Fig. 2;

Fig. 4    das Vorsatzgerät gemäß Fig. 3 auf einem in Terrassenanbauweise angelegten Abschnitt eines Feldes; und

Fig. 5    das nach dem erfindungsgemäßen Verfahren betriebene Vorsatzgerät gemäß Fig. 4.

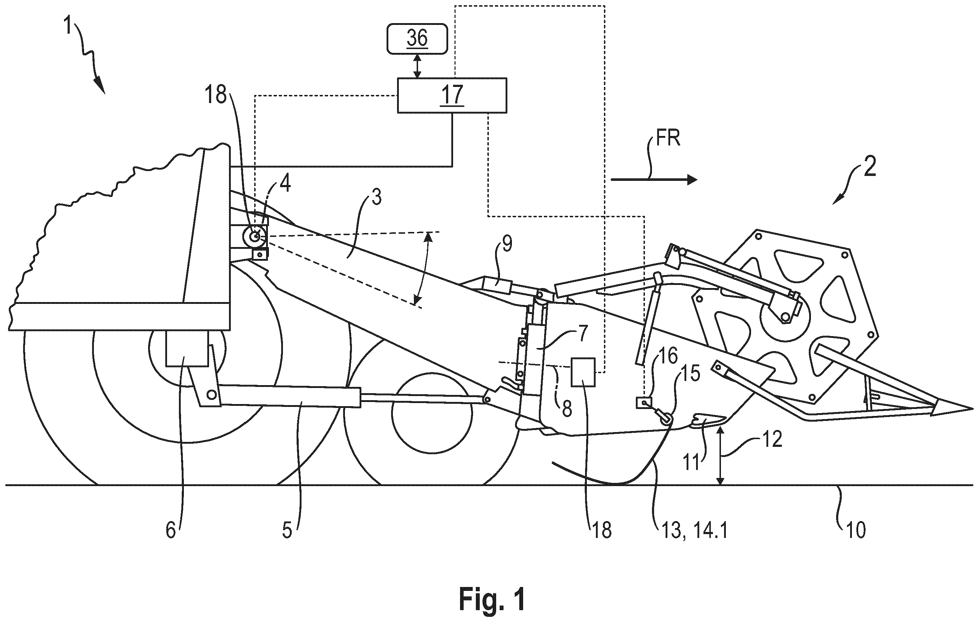

In Fig. 1 ist schematisch und exemplarisch eine Teilansicht eines Mähdreschers 1 mit einem daran angeordneten Vorsatzgerät 2 dargestellt. Das Vorsatzgerät 2 ist an einer Aufnahmevorrichtung 3 angeordnet. Die Aufnahmevorrichtung 3 ist um eine quer zur Fahrtrichtung FR orientierte Schwenkachse 4 in vertikaler Richtung verschwenkbar. Die Aufnahmevorrichtung 3 ist durch zumindest einen Aktor 5, der mit einem Ende an einer Konsole 6 des Mähdreschers 1 und mit seinem anderen Ende an der Aufnahmevorrichtung 3 angelenkt ist, um die quer zur Fahrtrichtung FR verlaufende Schwenkachse 4 schwenkbar. Der zumindest eine Aktor 5 ist bevorzugt als Hydraulikzylinder ausgeführt.

Mittels zumindest eines Linearaktors 7 kann eine Queranpassung des Vorsatzgerätes 2 auf das aktuelle Bodenniveau geregelt werden, wobei im vorliegenden Ausführungsbeispiel der als Hubzylinder ausgeführte Linearaktor 7 das Vorsatzgerät 2 in an sich bekannter Weise um eine in Fahrtrichtung FR weisende virtuelle Pendelachse 8 verschwenken kann.

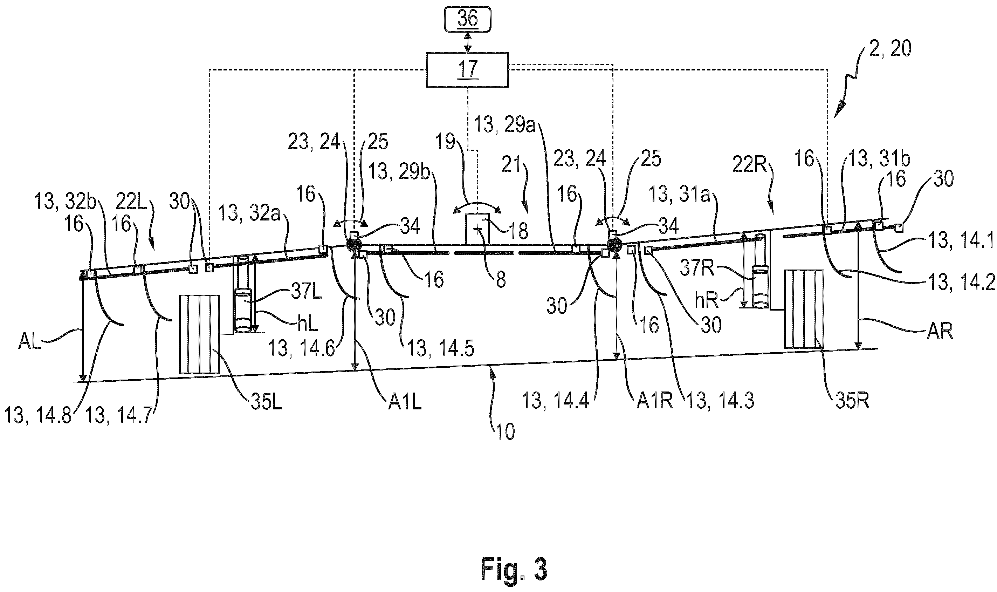

Bevorzugt kann die Queranpassung des Vorsatzgerätes 2 durch in den Randbereichen des Vorsatzgerätes 2 angeordnete Stützelemente 35L, 35R durchgeführt werden, wie in Fig. 3 dargestellt. Hierzu können die Stützelemente 35L, 35R diesen zugeordnete Aktoren 37L, 37R aufweisen. Die Aktoren 37L, 37R können als ansteuerbare Linearaktoren, insbesondere druckgeregelte Hydraulikzylinder, ausgeführt sein. Die Aktoren 37L, 37R der Stützelemente 35L, 35R werden zur Queranpassung des Vorsatzgerätes 2 mittels einer Druckregelung angesteuert. Dabei wird der Druck in den Aktoren 37L, 37R geregelt, um die Queranpassung vorzunehmen. Hierzu wird bei einer detektierten Lageabweichung der Druck in einem der Aktoren 37L, 37R erhöht und in dem anderen Aktor 37L, 37R gesenkt. Der zumindest eine als Hydraulikzylinder ausgeführte Linearaktor 7 an der Aufnahmevorrichtung 3 wird dabei in einer Schwimmstellung betrieben. Der vertikale Abstand des Vorsatzgerätes 2 relativ zum Boden 10 wird, in Abhängigkeit von der Ausgestaltung des Vorsatzgerätes 2, unter anderem durch die Neigung der Aufnahmevorrichtung 3 bestimmt. Eine Druckregelung für die Aktoren 37L, 37R der aktiven Stützelemente 35L, 35R ist aus der DE 10 2021 123 337 A1 bekannt, auf deren Inhalt vollumfänglich Bezug genommen wird.

Ein auf der Oberseite der Aufnahmevorrichtung 3 angeordneter Hydraulikzylinder 9 ermöglicht es, einen Schnittwinkel einzustellen, welcher vom Vorsatzgerät 2 und vom Boden 10 eingeschlossen wird.

Die Neigung des Vorsatzgerätes 2 bzw. des Mittensegmentes 21 des Bandschneidwerks 20 relativ zum Mähdrescher 1 wird als Querlagewinkel 19 bezeichnet. Der zumindest eine Linearaktoren 7 kann das Vorsatzgerät 2 bzw. das Mittensegment 21 um die virtuelle Pendelachse 8 verschwenken, wodurch sich der Querlagewinkel 19, d.h. die Schrägneigung relativ zum Mähdrescher 1, einstellt. Der Querlagewinkel 19 kann durch zumindest einen Winkelsensor 18 detektiert werden. Die Signale des Winkelsensors 18 werden an eine Steuereinheit 17 zur Auswertung übertragen.

Das Vorsatzgerät 2 umfasst einen Messerbalken 11, welcher in einem einstellbaren vertikalen Abstand 12 zum Boden 10 geführt wird. Der vertikale Abstand 12 wird durch die Aktoren 5 an der Aufnahmevorrichtung 3 eingestellt. Um die Einhaltung des Abstands 12 zum Boden 10 zu überwachen, sind an der Unterseite des Vorsatzgerätes 2 mehrere den Boden 10 kontaktierende Abstandssensoren 13 angeordnet. Im dargestellten Ausführungsbeispiel sind die Abstandssensoren 13 als mehrere Tastbügel 14.1 bis 14.8 ausgeführt, wie aus Fig. 3 ersichtlich. Die Tastbügel 14.1 bis 14.8 sind jeweils um eine quer zur Fahrtrichtung FR verlaufende Achse 15 schwenkbar. Die Schwenkbewegung des jeweiligen Tastbügels 14.1 bis 14.8 wird mittels jeweils eines Sensors 16, welcher mit der jeweiligen Achse 15 eines Tastbügels 14.1 bis 14.8 gekoppelt ist, bestimmt. Die Sensoren 16 können bevorzugt als Potentiometer ausgeführt sein. Zur Ansteuerung des Mähdreschers 1 und dessen Arbeitsaggregaten, wozu unter anderem das Vorsatzgerät 2 und die Aufnahmevorrichtung 3 zählen, ist die Steuereinheit 17 vorgesehen.

Durch zumindest einen Winkelsensor 18 und/oder durch Detektion der Verstellung der Aktoren 5 an der Aufnahmevorrichtung 3 mittels zumindest eines Wegaufnehmers kann ein Neigungswinkel bestimmt werden. Die Signale des zumindest einen Winkelsensors 18 werden an die Steuereinheit 17 zur Auswertung übertragen. Die Aktoren 5 können durch die Steuereinheit 17 angesteuert werden.

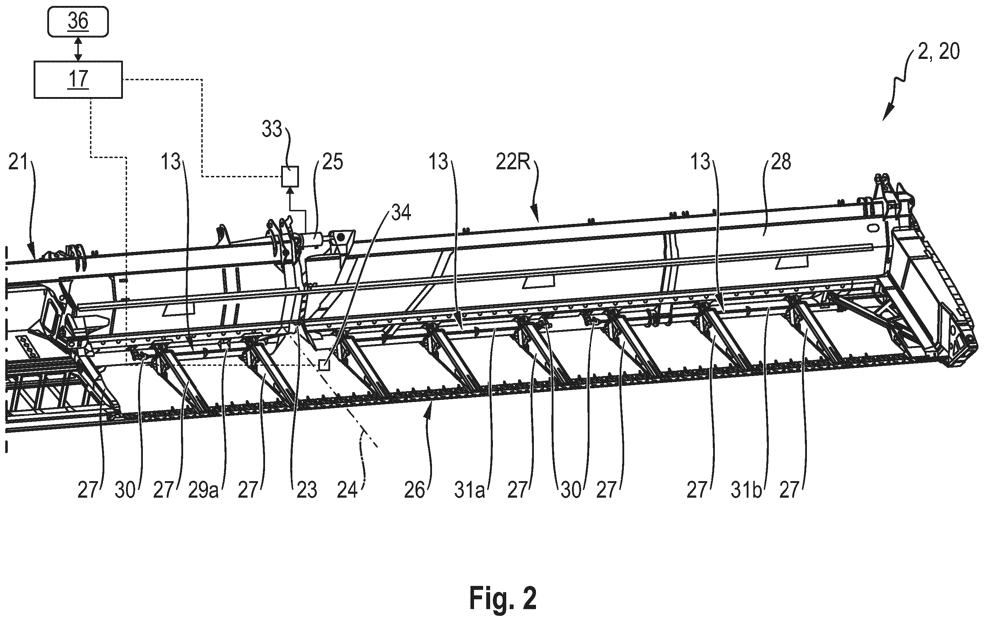

Fig. 2 zeigt schematisch und exemplarisch eine Teilansicht eines als Bandschneidwerk 20 ausgeführten Vorsatzgerätes 2. Der Aufbau des als Bandschneidwerk 20 ausgeführten Vorsatzgerätes 2 ist spiegelsymmetrisch, so dass die nachfolgenden Ausführungen für die nicht dargestellte Hälfte des Bandschneidwerks 20 entsprechend gelten.

Das Bandschneidwerk 20 umfasst ein, in Fig. 2 zur Hälfte dargestelltes, Mittensegment 21 sowie zumindest zwei Seitensegmente 22L, 22R. Von den Seitensegmenten 22L, 22R ist in Fig. 2 lediglich das rechte Seitensegmente 22R gezeigt. Das Bandschneidwerk 20 ist im Bereich des Mittensegmentes 21, wie weiter oben bereits beschrieben, an der Aufnahmevorrichtung 3 angeordnet. Zur Förderung des aufgenommenen Erntegutes sind - nicht dargestellte - Förderbänder vorgesehen, welche in bekannter Weise das Erntegut von den Seitensegmenten 22L, 22R seitwärts zum Mittensegment 21 fördern. Das jeweilige Seitensegmente 22L, 22R ist durch jeweils ein Rahmengelenk 23 mit dem Mittensegmente 21 um eine parallel zur Fahrtrichtung FR orientierte und im Wesentlichen horizontal verlaufende Schwenkachse 24 schwenkbar verbunden. Das jeweilige Seitensegment 22L, 22R ist mittels eines Aktors 25 relativ zum Mittensegment 21 um die Schwenkachse 24 in vertikaler Richtung schwenkbar. Gegenüber dem Mittensegment 21 sind die Seitensegmente 22L, 22R voneinander unabhängig in eine Position überführbar, in welcher sich das äußere Ende des jeweiligen Seitensegmentes 22L, 22R in einer Ebene oberhalb und/oder unterhalb des Mittensegmentes 21 befindet.

Dem hier und vorzugsweise als Hydraulikzylinder ausgeführten Aktor 25 ist ein Drucksensor 33 zugeordnet, durch welchen die Druckbeaufschlagung des Aktors 25 erfasst wird. Die Druckbeaufschlagung des Aktors 25 wird durch die Steuereinheit 17 angesteuert. Der jeweiligen Schwenkachse 24 ist eine, insbesondere als Potentiometer ausgeführte, Sensoreinrichtung 34 zugeordnet, welche der Bestimmung der Lage des jeweiligen Seitensegmentes 22L, 22R relativ zum Mittenabschnitt 21 dient.

Im frontseitigen Bereich des als Bandschneidwerk 20 ausgeführten Vorsatzgerätes 2 ist ein flexibler Messerbalken 26 angeordnet, der sich im Wesentlichen über die Gesamtbreite des Bandschneidwerks 20 erstreckt. Eine Mehrzahl von über die Breite des Bandschneidwerks 20 verteilt angeordneten Tragarme 27, die mit einem Ende um eine quer zur Fahrtrichtung FR verlaufende Achse schwenkbar am in den Mittenabschnitt 21 sowie die zumindest zwei Seitensegmente 22L, 22R unterteilten bzw. segmentierten Rahmen 28 des Bandschneidwerks 20 angeordnet sind, tragen an ihren freien Enden den Messerbalken 26. Durch die individuelle Schwenkbarkeit der Tragarme 27 kann der flexible Messerbalken 26 in vertikaler Richtung eine Ausgleichsbewegung ausführen, um auf eine Änderung der Bodenkontur zu reagieren, die von den über den Boden 10 geführten Tragarmen 27 aufgenommen wird. Dabei kann der Messerbalken 26 eine im Wesentlichen wellenförmige Auslenkung erfahren.

Die beidseitig benachbart zur Aufnahmevorrichtung 3 angeordneten Tragarme 27 des Mittenabschnitts 21 sind durch jeweils eine Messwelle 29a, 29b, die mit den jeweiligen Tragarmen 27 verbunden ist, miteinander verbunden. An der jeweiligen Messwelle 29a, 29b ist zumindest ein Potentiometer 30 angeordnet, durch welches die vertikale Auslenkung der durch die Messwelle 29a, 29b miteinander verbunden Tragarme 27 erfasst wird. Die Tragarme 27 der Seitensegmente 22L, 22R sind ebenfalls durch Messwellen 31a, 31b, die mit dem jeweiligen Tragarm 27 verbunden sind, miteinander verbunden. Hier und vorzugsweise sind zumindest zwei Messwellen 31a, 31b bzw. 32a, 32b an jedem Seitensegment 22L, 22R vorgesehen, von denen die Messwelle 31a bzw. 32a, ausgehend vom Mittenschnitt 21, zwei oder mehr Tragarme 27 messtechnisch miteinander koppelt. Die Messwelle 31b bzw. 32b koppelt, ausgehend vom äußeren Endbereich des Seitensegmentes 22L, 22R zwei oder mehr Tragarme 27 messtechnisch miteinander.

An der jeweiligen Messwelle 31a, 31b, 32a, 32b ist ebenfalls zumindest ein Potentiometer 30 angeordnet. Die Messwellen 29a, 29b, 31a, 31b, 32a, 32b und die zugehörigen Potentiometer 30 bilden ebenfalls Abstandssensoren 13, mit denen ein vertikaler Abstand 12 des Bandschneidwerks 20 respektive die vertikale Auslenkung des Messerbalkens 26 zum Boden 10 in an sich bekannter Weise bestimmt wird. Die Messwellen 29a, 29b, 31a, 31b, 32a, 32b erfassen in einer spezifischen Betriebsart des Bandschneidwerks 20, in welcher der Messerbalken 26 über die gesamte Breite des Bandschneidwerks 20 auf dem Boden 10 aufliegt, in welcher Position sich der jeweilige um die quer zur Fahrtrichtung FR verlaufende Achse verschwenkbare Tragarm 27 relativ zum Rahmen 28 des Mittenabschnitt 21 bzw. der Seitensegmente 22L, 22R befindet. Der Rahmen 28 wird durch das Anheben und Absenken der Aufnahmevorrichtung 3 in einer gewünschten Position zum Boden 10 geführt. Bei einem Betrieb in dieser spezifischen Betriebsart des Bandschneidwerks 20 wird der Abstand des Rahmens 28 zum Boden 10 mittels der Messwellen 29a, 29b, 31a, 31b, 32a, 32b bestimmt. Dabei erfassen die Messwellen 29a, 29b, 31a, 31b, 32a, 32b die durch die Bodenkontur bedingte vertikale Auslenkung der Tragarme 27.

Bei dem in Fig. 2 dargestellten Ausführungsbeispiel bilden die Messwellen 29a, 29b, 31a, 31b, 32a, 32b in Verbindung mit den diesen zugeordneten Potentiometern 30 die Abstandssensoren 13.

Durch eine messtechnische Verbindung der Tragarme 27 mit der jeweiligen Messwelle 29a, 29b, 31a, 31b, 32a, 32b wird die Auslenkung der Tragarme 27 in vertikaler Richtung aufgrund der Bodenkontur durch die jeweilige Messwelle 29a, 29b, 31a, 31b, 32a, 32b erfasst. Die Signale der Messwellen 29a, 29b, 31a, 31b, 32a, 32b werden analog zu den Signalen der als Tastbügel 14.1 bis 14.8 ausgeführten Abstandssensoren 13 durch die Steuereinheit 17 des Mähdreschers 1 ausgewertet.

Der Verstellweg, um welchen die Seitensegmente 22L, 22R um die jeweilige Schwenkachse 24 mittels der Aktoren 25 in vertikaler Richtung nach oben oder unten verschwenkbar sind, ist durch einen Anschlag mechanisch begrenzt. Der Anschlag kann durch den jeweiligen Aktor 25 gebildet sein oder als zusätzliches Bauteil am Rahmen 28.

Die Darstellung in Fig. 3 zeigt eine schematische und stark vereinfachte Darstellung des als Bandschneidwerk 20 ausgeführten segmentierten Vorsatzgerätes 2 gemäß Fig. 2. Die Darstellung zeigt aus Gründen der Vereinfachung gleichzeitig die Anordnung der Abstandssensoren 13, die als Tastbügel 14.1 bis 14.8 und/oder als Messwellen 29a, 29b, 31a, 31b, 32a, 32b ausgeführt sein können. Die grundsätzliche Verfahrensweise, mit welcher zur Bodenführung des Vorsatzgerätes 2 die Positionierung der Seitensegmente 22L, 22R relativ zum Mittenabschnitt 21 unabhängig von einer durch den Mähdrescher 1 angesteuerten Höhen- und Querführung des Vorsatzgerätes 2 gesteuert oder geregelt wird, unterscheidet sich dabei nicht. Es kann lediglich die Art und/oder Anzahl der als Tastbügel 14.1 bis 14.8 und/oder als Messwellen 29a, 29b, 31a, 31b, 32a, 32b ausgeführten Abstandsensoren 13 variieren.

Die Aktoren 25, durch welche das jeweilige Seitensegment 22L, 22R relativ zum Mittensegment 21 um die Schwenkachse 24 schwenken, sind durch Pfeile symbolisch angedeutet. Dies gilt entsprechend für die symbolische Darstellung der Rahmengelenke 23 und der Schwenkachsen 24 zwischen dem Mittensegment 21 und den Seitensegmenten 22L, 22R.

Die Seitensegmente 22L, 22R werden unter Berücksichtigung eines auswählbaren Betriebsmodus zur Bodenführung des Vorsatzgerätes 2 gesteuert oder geregelt. Die Betriebsmodi können aus der Gruppe "Schnitthöhenregelung", "Bodendruckregelung" und "Schnitthöhenvorwahl" ausgewählt werden. Hierbei kann mittels einer Benutzerschnittstelle 36 oder einer sonstigen mit der Steuereinheit 17 des Mähdreschers 1 verbundenen Eingabe-Ausgabeeinheit einer der Betriebsmodi ausgewählt werden.

Bei der Schnitthöhenregelung als Betriebsmodus zur Bodenführung wird der Abstand 12 des Vorsatzgerätes 2 relativ zum Boden 10 durch die Eingabe zumindest eines Sollwertes vorgegeben.

Die Querregelung des Vorsatzgerätes 2 wird im Allgemeinen in Abhängigkeit von einer zu bestimmenden Abstandsdifferenz $\Delta h_{quer}$ zwischen dem Vorsatzgerät 2 und dem Boden 10 durchgeführt, die durch die Querregelung ausgeglichen werden soll.

Dazu wird ein jeweiliger Abstand AL, AR der Seitensegmente 22L, 22R zum Boden durch die am äußeren Ende des jeweiligen Seitensegmentes 22L, 22R angeordneten Abstandssensoren 13 bestimmt, was dem aus der EP 4 162 789 A1 bekannten Stand der Technik entspricht.

Die Abstandsdifferenz $\Delta h_{quer}$ zwischen den Seitensegmenten 22L, 22R wird im Fall von als Tastbügeln 14.1 bis 14.8 ausgeführten Abstandssensoren 13 wie folgt bestimmt:

$$\Delta h_{quer} = \min(14.1, 14.2) - \min(14.7, 14.8).$$

Dabei wird jeweils der durch die Tastbügel 14.1, 14.2 des Seitensegmentes 22L sowie die Tastbügel 14.7, 14.8 des Seitensegmentes 22R erfasste Minimalwert für den jeweiligen Abstand AL, AR der Seitensegmente 22L, 22R zum Boden verwendet. Das Ziel der Regelung ist, dass die Abstandsdifferenz $\Delta h_{quer}$ der beiden Seitensegmente 22L, 22R Null beträgt.

Im Fall von Messwellen 29a, 29b, 31a, 31b, 32a, 32b als Abstandssensoren 13 wird die Abstandsdifferenz $\Delta h_{quer}$ abweichend von der Verwendung von Tastbügeln 14.1 bis 14.8, welche aufgrund ihrer spezifischen Anordnung punktuell messen, durch eine Auswertung von an mehrerer Stellen des jeweiligen Seitensegmentes 22L, 22R erfassten Abständen eines jeweiligen Seitensegmentes 22L, 22R zum Boden 10 bestimmt. Die äußere Messwelle 31b erfasst den Abstand AR am äußeren Ende des Seitensegmentes 22R, während die Messwelle 32b einen Wert für den Abstand AL am äußeren Ende des gegenüberliegenden Seitensegmentes 22L erfasst.

Die Abstandsdifferenz $\Delta h_{quer}$ zwischen den Seitensegmenten 22L, 22R wird im Fall von als Messwellen 29a, 29b, 31a, 31b, 32a, 32b ausgeführten Abstandssensoren 13 wie folgt bestimmt:

$$\Delta h_{quer} = (31b) - (32b).$$

An den Seitensegmenten 22L, 22R ist jeweils zumindest ein lageveränderbares Stützelement 35L, 35R angeordnet. Hier und vorzugsweise ist das jeweilige Stützelement 35L, 35R als ein Stützrad ausgeführt. Die Stützelemente 35L, 35R können passiv oder aktiv betätigt werden, um in vertikaler Richtung durch Schwenken um eine horizontale Achse in ihrer Höhe verstellt zu werden. Passive Stützelemente 35R, 35L können mit einer hydropneumatischen Federung ausgeführt sein. Hier und vorzugsweise weisen die aktiven Stützelemente 35L, 35R zur Queranpassung diesen zugeordnete Aktoren 37L, 37R auf. Die Aktoren 37L, 37R können als mittels Druckregelung ansteuerbare Linearaktoren, insbesondere Hydraulikzylinder, ausgeführt sein, um die auf die Stützelemente 35L, 35R einwirkende Stützkraft durch Erhöhen oder Absenken von Druck im jeweiligen Aktor 37L, 37R einzustellen, wodurch sich ihre vertikale Auslenkung hR, hL und damit der Abstand 12 zwischen dem Vorsatzgerät 2 respektive den Seitensegmenten 22L, 22R des Bandschneidwerkes 20 und dem Boden 10 verändert. Ebenso können, wie weiter oben bereits ausgeführt, die Aktoren 37L, 37R der Stützelemente 35L, 35R zur Queranpassung des Vorsatzgerätes 2 mittels einer Druckregelung angesteuert werden. Hierzu können die Aktoren 37L, 37R entsprechend der einzustellenden Querneigung durch die Druckregelung mit unterschiedlichen Drücken beaufschlagt werden.

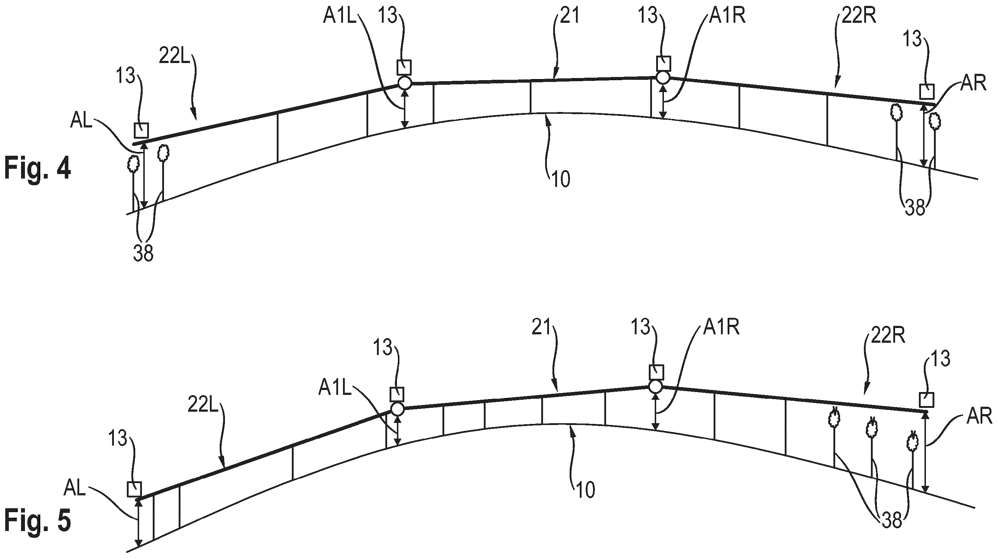

In Fig. 4 ist das Vorsatzgerät 2 stark vereinfacht auf einem in Terrassenanbauweise angelegten Abschnitt eines Feldes dargestellt. Unter diesen Bedingungen kann es dazu kommen, dass die Verstellung der Seitensegmente 22L, 22R bei der Anpassung an die Bodenkontur auf beiden Seiten an einen unteren mechanischen Endanschlag kommt und damit eine weitere Anpassung an die Bodenkontur durch Absenken der Seitensegmente 22L, 22R relativ zum Mittensegment 21 nicht möglich ist. Durch den weiter oben beschriebenen Querausgleich anhand der Signale der äußeren Abstandssensoren 13 respektive der Tastbügel 14.1, 14.2 und 14.7, 14.8 bzw. der Messwellen 31b, 32b, wird das Vorsatzgerätes 2 mittig ausgerichtet, wie weiter oben ausgeführt. Dabei werden die Abstände AL und AR aneinander angeglichen, bis deren Differenz Null beträgt. Unter den in Fig. 4 dargestellten Bedingungen können die Seitensegmente 22L, 22R durch diese vereinfachte Querregelung an ihre Endanschläge kommen. Dies kann aufgrund der besonderen Bodenkontur dazu führen, dass auf beiden Seiten des Vorsatzgerätes 2, insbesondere in den äußeren Randbereichen der Seitensegmente 22L, 22R, Erntegut 38 stehen gelassen wird.

In Fig. 5 ist das Vorsatzgerät 2 gemäß Fig. 4 unter Verwendung des erfindungsgemäßen Verfahrens dargestellt. Dabei ist zum Betreiben des Vorsatzgerätes 2 vorgesehen, dass die Querregelung durch die Steuereinheit 17 in Abhängigkeit von einer Priorisierung zur Höhenführung eines der beiden Seitensegmente 22L, 22R durchgeführt wird. Im in Fig. 5 dargestellten Ausführungsbeispiel ist das Seitensegment 22L priorisiert. Das nachstehend Gesagte gilt entsprechend bei einer Priorisierung des Seitensegmentes 22R.

Der durch das erfindungsgemäße Verfahren erreichte Effekt besteht darin, dass durch den mittels Priorisierung vorgegebenen Querausgleich das Vorsatzgerät 2 so positioniert wird, dass das priorisierte Seitensegment 22L und das Mittensegment 21 des Vorsatzgerätes 2 im Mittel die vorgegebene eingestellte Schnitthöhe erreichen, auch wenn im Randbereich des nicht priorisierten Seitensegmentes 22R Erntegut 38, wie in Fig. 5 beispielhaft angedeutet, stehen bleiben kann.

Die Priorisierung zur Höhenführung eines der Seitensegmente 22L, 22R wird durch eine manuelle Eingabe und/oder Auswahl mittels der Benutzerschnittstelle 36 vorgegeben.

Durch die Priorisierung wird das priorisierte Seitensegment 22L im äußeren Randbereich mit einem geringeren Abstand AL zum Boden 10 geführt als das andere Seitensegment 22R, das im äußeren Randbereich einen Abstand AR zum Boden 10 aufweist.

Es werden die Signale von mindestens einem am äußeren Ende des jeweiligen Seitensegmentes 22L, 22R und zumindest einem zum Mittensegment 21 benachbart angeordneten Abstandssensor 13 sowie von zumindest zwei an dem Mittensegment 21 zueinander beabstandet angeordneten Abstandssensoren 13 von der Steuereinheit 17 empfangen und ausgewertet, aus denen der jeweilige Abstand AL, A1L, AR, A1R der Seitensegmente 22L, 22R und des Mittensegmentes 21 zum Boden 10 bestimmt wird.

Hierbei werden entsprechend der vorgenommenen Priorisierung des Seitensegmentes 22L zur Querregelung nur Signale des mindestens einen am äußeren Ende angeordneten Abstandssensors 13, d.h. der Tastbügel 14.7, 14.8 bzw. der Messwelle 32b, des priorisierten Seitensegmentes 22L und die Signale aller Abstandssensoren 13, d.h. Tastbügel 14.3, 14.2, 14.1 bzw. Messwellen 31a, 31b, zumindest des anderen Seitensegmentes 22R verwendet. Zusätzlich können die Signale zumindest des benachbart zum nicht priorisierten Seitensegment 22R angeordneten Abstandssensors 13, d.h. der Tastbügel 14.4 bzw. der Messwelle 29a am Mittensegment 21 verwendet werden.

Für die Querregelung werden nur ein Minimalwert des mindestens einen Abstandssensors 13, der Tastbügel 14.7, 14.8 bzw. der Messwelle 32b, am äußeren Ende des priorisierten Seitensegmentes 22L und nur ein Minimalwert aller Abstandssensoren 13, der Tastbügel 14.3, 14.2, 14.1 bzw. der Messwellen 31a, 31b des anderen Seitensegmentes 22R sowie des Abstandssensors 13 am Mittensegment 21, der Tastbügel 14.4 bzw. der Messwelle 29a, verwendet.

Dazu wird durch die Vorverarbeitung die Differenz des Abstandes $\Delta h_{querL}$ zwischen dem Vorsatzgerät 2 und dem Boden 10, die durch den Querausgleich ausgeglichen werden soll, im Fall von als Tastbügeln 14.1 bis 14.8 ausgeführten Abstandssensoren 13 durch die Steuereinheit 17 bei Priorisierung des Seitensegmentes 22L wie folgt bestimmt:

$$\Delta h_{querL} = \min(14.1, 14.2, 14.3, 14.4) - \min(14.7, 14.8).$$

Die Differenz des Abstandes $\Delta h_{querL}$ zwischen dem Vorsatzgerät 2 und dem Boden 10 basiert somit auf dem Minimalwert der Signale der Tastbügel 14.1 bis 14.4 und dem Minimalwert der Signale der Tastbügel 14.7 und 14.8.

Bei einer bei Priorisierung des Seitensegmentes 22R wird die Differenz des Abstandes $\Delta h_{querR}$ wie folgt bestimmt:

$$\Delta h_{querR} = min(14.1, 14.2) - min(14.5, 14.6, 14.7, 14.8).$$

Die Bestimmung der Differenz des Abstandes $\Delta h_{querL}$ zwischen dem Vorsatzgerät 2 und dem Boden 10, die durch den Querausgleich ausgeglichen werden soll, erfolgt im Fall der als Messwellen 28a, 29b, 31a, 31b, 32a, 32b ausgeführten Abstandssensoren 13 durch die Steuereinheit 17 bei Priorisierung des Seitensegmentes 22L wie folgt:

$$\Delta h_{querL} = \min(31b, 31a, 29a) - (32b).$$

Die Differenz des Abstandes $\Delta h_{querL}$ zwischen dem Vorsatzgerät 2 und dem Boden 10 basiert somit auf einem der Minimalwerte der Signale der Messwellen 31b, 31a, 29a und dem Minimalwert des Signals der Messwelle 32b.

Bei einer bei Priorisierung des Seitensegmentes 22R wird die Differenz des Abstandes $Dh_{querR}$ wie folgt bestimmt:

$$\Delta h_{querR} = (31b) - \min(29b, 32a, 32. b).$$

Um durch den Querausgleich das Vorsatzgerät 2 so zu positionieren, dass das priorisierte Seitensegment 22L bzw. 22R und das Mittensegment 21 des Vorsatzgerätes 2 im Mittel die eingestellte Schnitthöhe erreichen, werden zumindest die Aktoren 25 durch die Steuereinheit 17 angesteuert, bis die Differenz des Abstandes $\Delta h_{querL}$ bzw. $\Delta h_{querR}$ Null beträgt. Der Aktor 37L, 37R der aktiven Stützelemente 35L, 35R am priorisierten Seitensegment 22L bzw. 22R wird entsprechend zur Queranpassung des Vorsatzgerätes 2 durch die Druckregelung angesteuert.

**Bezugszeichenliste**

| | | | | |
|---|---|---|---|---|
| 1 | Mähdrescher | | 34 | Sensoreinrichtung |
| 2 | Vorsatzgerät | | 35L | Stützelement |
| 3 | Aufnahmevorrichtung | | 35R | Stützelement |
| 4 | Schwenkachse | | 36 | Benutzerschnittstelle |
| 5 | Aktor | | 37L | Aktor |
| 6 | Konsole | | 37R | Aktor |
| 7 | Linearaktor | | 38 | Erntegut |
| 8 | Pendelachse | | | |
| 9 | Hydraulikzylinder | | FR | Fahrtrichtung |
| 10 | Boden | | AL | Abstand |
| 11 | Messerbalken | | A1L | Abstand |
| 12 | Abstand | | AR | Abstand |
| 13 | Abstandssensor | | A1R | Abstand |
| 14.1-14.8 | Tastbügel | | hL | Auslenkung |
| 15 | Achse | | hR | Auslenkung |
| 16 | Sensor | | | |
| 17 | Steuereinheit | | | |
| 18 | Winkelsensor | | | |
| 19 | Querlagewinkel | | | |
| 20 | Bandschneidwerk | | | |
| 21 | Mittensegment | | | |
| 22L, 22R | Seitensegment | | | |
| 23 | Rahmengelenk | | | |
| 24 | Schwenkachse | | | |

(fortgesetzt)

| | |
|---|---|
| 25 | Aktor |
| 26 | Messerbalken |
| 27 | Tragarm |
| 28 | Rahmen |
| 29a, 2b | Messwelle |
| 30 | Potentiometer |
| 31a, 31b | Messwelle |
| 32a, 32b | Messwelle |
| 33 | Drucksensor |

**Patentansprüche**

1. Verfahren zum Betreiben eines an einer durch Aktoren (5) höhenverstellbaren Aufnahmevorrichtung (3) eines selbstfahrenden Mähdreschers (1) angeordneten Vorsatzgerätes (2, 20), welches ein Mittensegment (21) und zwei Seitensegmente (22L, 22R) umfasst, die jeweils durch ein Rahmengelenk (23) mit dem Mittensegment (21) um eine in Fahrtrichtung (FR) orientierte Schwenkachse (24) schwenkbar verbunden sind, wobei das jeweilige Seitensegment (22L, 22R) mittels zumindest eines Aktors (25), der von einer Steuereinheit (17) angesteuert wird, relativ zum Mittensegment (21) um die Schwenkachse (24) schwenkbar ist, wobei ein Querlagewinkel (19) des Vorsatzgerätes (2, 20) durch Schwenken um eine virtuelle Pendelachse (8) der Aufnahmevorrichtung (3) eingestellt wird, wobei ein Abstand (12) zwischen Boden (10) und Vorsatzgerät (2, 20) und/oder Messerbalken (26) mittels an der Unterseite des Vorsatzgerätes (2, 20) angeordneter Abstandssensoren (13) bestimmt wird, deren Signale der Steuereinheit (17) zur Auswertung zugeführt werden, durch welche in Abhängigkeit von den Signalen eine Querregelung des Vorsatzgerätes (2, 20) und/oder der jeweiligen Seitensegmente (22L, 22R) angesteuert wird, **dadurch gekennzeichnet, dass** die Querregelung durch die Steuereinheit (17) in Abhängigkeit von einer Priorisierung zur Höhenführung eines der beiden Seitensegmente (22L, 22R) durchgeführt wird.

2. Verfahren nach Anspruch 1, **dadurch gekennzeichnet, dass** die Priorisierung zur Höhenführung eines der Seitensegmente (22L, 22R) durch eine manuelle Eingabe und/oder Auswahl mittels einer Benutzerschnittstelle (36) vorgegeben wird.

3. Verfahren nach Anspruch 1 oder 2, **dadurch gekennzeichnet, dass** das priorisierte Seitensegment (22L, 22R) mit einem geringeren Abstand zum Boden (10) geführt wird als das andere Seitensegment (22L, 22R).

4. Verfahren nach einem der Ansprüche 1 bis 3, **dadurch gekennzeichnet, dass** die Signale von mindestens einem am äußeren Ende des jeweiligen Seitensegmentes (22L, 22R) und zumindest einem zum Mittensegment (21) benachbart angeordneten Abstandssensor (13) sowie zumindest zwei an dem Mittensegment (21) zueinander beabstandet angeordneten Abstandssensoren (13) von der Steuereinheit (17) empfangen und ausgewertet werden, aus denen ein jeweiliger Abstand (AR, A1R, AL, A1L) der Seitensegmente (22L, 22R) und des Mittensegmentes (21) zum Boden (10) bestimmt wird.

5. Verfahren nach Anspruch 4, **dadurch gekennzeichnet, dass** entsprechend der Priorisierung eines Seitensegmentes (22L, 22R) zur Querregelung nur Signale des mindestens einen am äußeren Ende angeordneten Abstandssensors (13) des priorisierten Seitensegmentes (22L, 22R) und die Signale aller Abstandssensoren (13) zumindest des anderen Seitensegmentes (22L, 22R) verwendet werden.

6. Verfahren nach Anspruch 5, **dadurch gekennzeichnet, dass** zusätzlich Signale des am Mittensegment (21) angeordneten Abstandssensors (13) verwendet werden, welcher dem priorisierten Seitensegment (22L, 22R) abgewandt angeordnet ist.

7. Verfahren nach Anspruch 5 oder 6, **dadurch gekennzeichnet, dass** nur ein Minimalwert des mindestens einen Abstandssensors (13) am äußeren Ende des priorisierten Seitensegmentes (22L, 22R) und nur ein Minimalwert aller Abstandssensoren (13) des anderen Seitensegmentes (22L, 22R) verwendet werden.

8. Verfahren nach einem der vorangehenden Ansprüche, **dadurch gekennzeichnet, dass** der Querlagewinkel (19) zum Querausgleich mittels zumindest einen an der Aufnahmevorrichtung (3) angeordneten Linearaktors (7) durch das Schwenken um die virtuelle Pendelachse (8) der Aufnahmevorrichtung (3) eingestellt wird.

9. Verfahren nach einem der vorangehenden Ansprüche, **dadurch gekennzeichnet, dass** der Querlagewinkel (19) zum Querausgleich mittels an dem Vorsatzgerät (2, 20) angeordneter Stützelemente (35L, 35R) durch das Schwenken um die virtuelle Pendelachse (8) der Aufnahmevorrichtung (3) eingestellt wird.

10. Verfahren nach einem der vorangehenden Ansprüche, **dadurch gekennzeichnet, dass** zum Querausgleich der Aktor (25) des priorisierten Seitensegmentes (22L, 22R) angesteuert wird.

11. Selbstfahrender Mähdrescher (1), umfassend ein an einer durch Aktoren (5) höhenverstellbaren Aufnahmevorrichtung (3) angeordnetes Vorsatzgerät (2, 20), welches ein Mittensegment (21) und zwei Seitensegmente (22L, 22R) umfasst, die jeweils durch ein Rahmengelenk (23) mit dem Mittensegment (21) um eine in Fahrtrichtung (FR) orientierte Schwenkachse (24) schwenkbar verbunden sind, wobei das jeweilige Seitensegment (22L, 22R) mittels zumindest eines Aktors (25), der von einer Steuereinheit (17) angesteuert wird, relativ zum Mittensegment (21) um die Schwenkachse (24) schwenkbar ist, wobei ein Querlagewinkel (19) des Vorsatzgerätes (2, 20) durch Schwenken um eine virtuelle Pendelachse (8) der Aufnahmevorrichtung (3) einstellbar ist, wobei zur Bestimmung eines Abstand (12) zwischen Boden (10) und Vorsatzgerät (2, 20) und/oder Messerbalken (26) an der Unterseite des Vorsatzgerätes (2, 20) Abstandssensoren (13) angeordnet sind, wobei die Steuereinheit (17) dazu eingerichtet ist, Signale von den Abstandssensoren (13) zu empfangen und auszuwerten und in Abhängigkeit von den Signalen eine Querregelung des Vorsatzgerätes (2, 20) und/oder der jeweiligen Seitensegmente (22L, 22R) anzusteuern, **dadurch gekennzeichnet, dass** die Steuereinheit (17) zur Durchführung des Verfahrens nach einem der Ansprüche 1 bis 10 eingerichtet und ausgeführt ist.

12. Mähdrescher (1) nach Anspruch 11, **dadurch gekennzeichnet, dass** die Steuereinheit (17) mit einer Benutzerschnittstelle (36) verbunden ist, welche zur Eingabe und/oder Auswahl einer Priorisierung zur Höhenführung eines der Seitensegmente (22L, 22R) eingerichtet ist.

**Fig. 1**

**Fig. 2**

EP 4 646 914 A1

Fig. 3

Fig. 4

Fig. 5

EP 4 646 914 A1

# EP 4 646 914 A1

Europäisches
Patentamt

European
Patent Office

Office européen
des brevets

## EUROPÄISCHER RECHERCHENBERICHT

Nummer der Anmeldung

EP 25 16 7280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 993 342 B1 (DEERE & CO [US]) 29. Juni 2016 (2016-06-29) * das ganze Dokument * ----- | 1-12 | INV. A01D41/14 A01D75/28 |
| A | US 2020/390035 A1 (HUNT CORY DOUGLAS [US] ET AL) 17. Dezember 2020 (2020-12-17) * das ganze Dokument * ----- | 1-12 | |
| A | EP 3 981 232 A1 (DEERE & CO [US]) 13. April 2022 (2022-04-13) * das ganze Dokument * ----- | 1-12 | |
| A | EP 4 147 563 A1 (CLAAS SELBSTFAHRENDE ERNTEMASCHINEN GMBH [DE]) 15. März 2023 (2023-03-15) * das ganze Dokument * ----- | 1-12 | |
| A | EP 4 162 789 A1 (CLAAS SELBSTFAHRENDE ERNTEMASCHINEN GMBH [DE]) 12. April 2023 (2023-04-12) * das ganze Dokument * ----- | 1-12 | RECHERCHIERTE SACHGEBIETE (IPC) A01D |

Der vorliegende Recherchenbericht wurde für alle Patentansprüche erstellt

| Recherchenort | Abschlußdatum der Recherche | Prüfer |
|---|---|---|
| München | 22. August 2025 | Giorgini, Gabriele |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 16 7280

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2025

| Im Recherchenbericht angeführtes Patentdokument | | Datum der Veröffentlichung | Mitglied(er) der Patentfamilie | | Datum der Veröffentlichung |
|---|---|---|---|---|---|
| EP 1993342 | B1 | 29-06-2016 | AR | 059699 A1 | 23-04-2008 |
| | | | BR | PI0708050 A2 | 17-05-2011 |
| | | | EP | 1993342 A2 | 26-11-2008 |
| | | | US | 2007204582 A1 | 06-09-2007 |
| | | | WO | 2007103164 A2 | 13-09-2007 |
| US 2020390035 | A1 | 17-12-2020 | AU | 2020293240 A1 | 06-01-2022 |
| | | | BR | 112021021374 A2 | 21-12-2021 |
| | | | CA | 3136244 A1 | 17-12-2020 |
| | | | CN | 113840531 A | 24-12-2021 |
| | | | EP | 3982711 A1 | 20-04-2022 |
| | | | US | 2020390035 A1 | 17-12-2020 |
| | | | US | 2022279719 A1 | 08-09-2022 |
| | | | WO | 2020252275 A1 | 17-12-2020 |
| EP 3981232 | A1 | 13-04-2022 | KEINE | | |
| EP 4147563 | A1 | 15-03-2023 | DE | 102021123337 A1 | 09-03-2023 |
| | | | EP | 4147563 A1 | 15-03-2023 |
| | | | US | 2023076926 A1 | 09-03-2023 |
| EP 4162789 | A1 | 12-04-2023 | DE | 102021125815 A1 | 06-04-2023 |
| | | | EP | 4162789 A1 | 12-04-2023 |
| | | | US | 2023105797 A1 | 06-04-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4162789 A1

- DE 102021123337 A1